# FASCICULE DE BREVET EUROPEEN

(11) **EP 3 768 978 B1**
(45) Date de publication et mention de la délivrance du brevet: **30.10.2024**
(21) Numéro de dépôt: 19720950.5
(22) Date de dépôt: 28.03.2019
(51) Int. Cl.: F04D 19/00, F04D 25/06, F04D 25/08, F04D 29/52, F04D 29/64, F04D 29/70, B60K 11/06

(54) **BOITIER DE VENTILATION A ÉCRAN DE PROTECTION CLIPSABLE**
LÜFTUNGSGEHÄUSE MIT EINEM AUFKLEMMBAREN SCHUTZGITTER
VENTILATION HOUSING COMPRISING A CLIP-ON PROTECTIVE SCREEN

(30) Priorité: 29.03.2018 FR 1852718
(43) Date de publication de la demande: 27.01.2021
(73) Titulaire: Valeo Systemes Thermiques-THS, 78322 Le Mesnil Saint Denis Cedex (FR)
(72) Inventeur: TRICOT, David, 53022 Laval (FR); TURCAS, Sylvain, 53022 Laval (FR); LERAY, Olivier, 53022 Laval (FR); MICHENAUD, Hervé, 53022 Laval (FR); FROSSARD, Céline, 53022 Laval (FR); MERCERON, Vincent, 53022 Laval (FR)
(74) Mandataire: Valeo Systèmes Thermiques
(86) Numéro de dépôt international: PCT/FR2019/050727
(87) Numéro de publication internationale: WO 2019/186075

(56) Documents cités:
- WO-A1-2009/066248
- US-A- 2 619 021
- US-A1- 2012 032 542
- US-B1- 8 210 824

## Description

### Domaine technique de l'invention

La présente invention concerne le domaine technique des ventilateurs pour véhicules automobiles. Plus particulièrement, la présente invention concerne le domaine technique des ventilateurs pour véhicules automobiles avec écran de protection du moteur du ventilateur, notamment de protection thermique.

### État de la technique

Un ventilateur pour véhicules automobiles comprend typiquement un boitier qui souvent se réduit à une buse de ventilation, une hélice de ventilation et un moteur. L'hélice de ventilation et le moteur sont logés dans la buse de ventilation. Notamment le moteur est logé dans un logement de moteur recouvert sur une face par la buse de ventilation. La buse de ventilation est typiquement en plastique et le moteur y est fixé par des vis.

Un tel ventilateur peut être prévu dans diverse partie du véhicule automobile. Ainsi, il peut être soumis à divers environnements. Dans certain de ces environnements, il est important de protéger le moteur de la chaleur émanant d'autres éléments du véhicule automobile. Également, il est parfois nécessaire de protéger le moteur contre des projections de liquide tel que de l'eau, ou de projectiles tels que des gravillons.

Pour cela, on prévoit typiquement un écran de protection thermique et/ou anti-éclaboussures. Un tel écran est généralement fixé à la buse de ventilation à l'aide de vis. Or, tandis que la fixation du moteur sur la buse de ventilation est une fixation métal sur plastique avec la tête de vis prenant appui sur le plastique, la fixation de l'écran sur la buse de ventilation est une fixation métal sur plastique avec la tête de vis prenant appui sur le métal. Ainsi, l'utilisation d'un tel écran nécessite bien souvent l'utilisation de deux types de vis différents compliquant les opérations d'assemblage du ventilateur.

Ainsi, il existe un besoin de prévoir un ventilateur pour véhicules automobiles avec écran de protection dont le montage ne nécessite par l'utilisation de deux types de vis différents,

Un ventilateur avec écran de protection selon l'art antérieur est divulgué dans le document US 2012/0032542 A1.

### Présentation de l'invention

Un objectif de la présente invention est de palier à au moins un inconvénient de l'état de la technique présenté ci-dessus.

Pour cela, la présente invention propose un boitier de ventilation comprenant :
- une buse de ventilation pour le logement d'hélice de ventilation, la buse de ventilation présentant un logement de moteur pour la réception d'un moteur de ventilateur ; et
- un écran de protection fixable sur la buse de ventilation de manière à recouvrir le logement de moteur du côté extérieur de la buse de ventilation,

la buse de ventilation et l'écran de protection étant destinés à être empilés suivant une direction d'empilement,
la fixation de l'écran de protection sur la buse de ventilation étant réalisée par un élément ressort et l'écran de protection recouvrant au plus le logement de moteur.

Ainsi, un tel boitier ne nécessite pas de fixation de l'écran de protection par vissage à la buse de ventilation, mais l'écran de protection est clipsable sur la buse de ventilation.

D'autres caractéristiques optionnelles et non limitatives de l'invention sont décrites ci-après.

L'écran de protection peut présenter un orifice circulaire et l'élément ressort deux ailettes face à face et s'étendant perpendiculairement à la surface sur laquelle l'élément ressort est prévu. Auquel cas, la forme des parois extérieures des ailettes correspond à celle de la paroi d'un cylindre à base circulaire de rayon égale à celui de l'orifice circulaire de l'écran de protection. Par ailleurs, les ailettes sont déformables de manière à se rapprocher l'une de l'autre. En outre, chacune des ailettes présente un élément de collet sur son extrémité libre de manière à empêcher le mouvement de l'écran de protection dans la direction d'empilement. En outre, la droite normale à la surface à partir de laquelle peut être prévue de manière à s'étendre les deux ailettes est parallèle à la direction d'empilement.

La buse de ventilation comprend une butée au moins limitant les mouvements de l'écran de protection selon au moins une direction. Auquel cas, la butée peut empêcher les mouvements de l'écran de protection selon la direction d'empilement. En outre ou alternativement, la butée limite les mouvements de l'écran de protection selon une direction perpendiculaire à la direction d'empilement. L'écran de protection comprend en périphérie une extension destinée à venir au contact de la butée. Auquel cas, la butée peut comprendre un logement de réception de l'extension et l'extension est insérable dans le logement de réception.

La buse de ventilation peut comprendre un taquet cylindrique et l'écran de protection présente un deuxième orifice circulaire pour l'insertion du taquet, les diamètres du taquet et du deuxième orifice étant sensiblement égaux de manière à ce que le taquet empêche tout mouvement de l'écran de protection selon une direction perpendiculaire à la direction d'empilement.

La buse de ventilation peut comprendre une paroi présentant une ouverture sous l'écran de protection et dans lequel l'écran de protection présente des ouvertures, l'ouverture de la paroi, d'une part, et celles de l'écran de protection, d'autre part, ne se faisant pas face.

La présente invention propose également un ventilateur pour véhicule automobile comprenant un boitier tel que décrit ci-dessus, une hélice de ventilation logée dans la buse de ventilation, et un moteur logé dans le logement de moteur de la buse de ventilation.

### Présentation des dessins

D'autres objectifs, caractéristiques et avantages apparaîtront de la lecture de la description qui suit en référence aux dessins donnés à titre illustratif et non limitatif, parmi lesquels :
- la figure 1 est une vue de trois-quarts et rapprochée d'un boitier de ventilation selon la présente invention, la buse de ventilation n'étant pas représentée dans sa totalité ;
- la figure 2 est une vue en coupe du boitier de ventilation de la figure 1 suivant le plan P ;
- les figures 3 et 4 sont deux vues de trois-quarts et rapprochées du boitier de ventilation de la figure 1 pendant l'assemblage de l'écran de protection sur la buse de ventilation ; et
- la figure 5 est une vue de trois-quarts d'un ventilateur pour véhicule automobile comprenant le boitier de ventilation de la figure 1.

### Description de l'invention

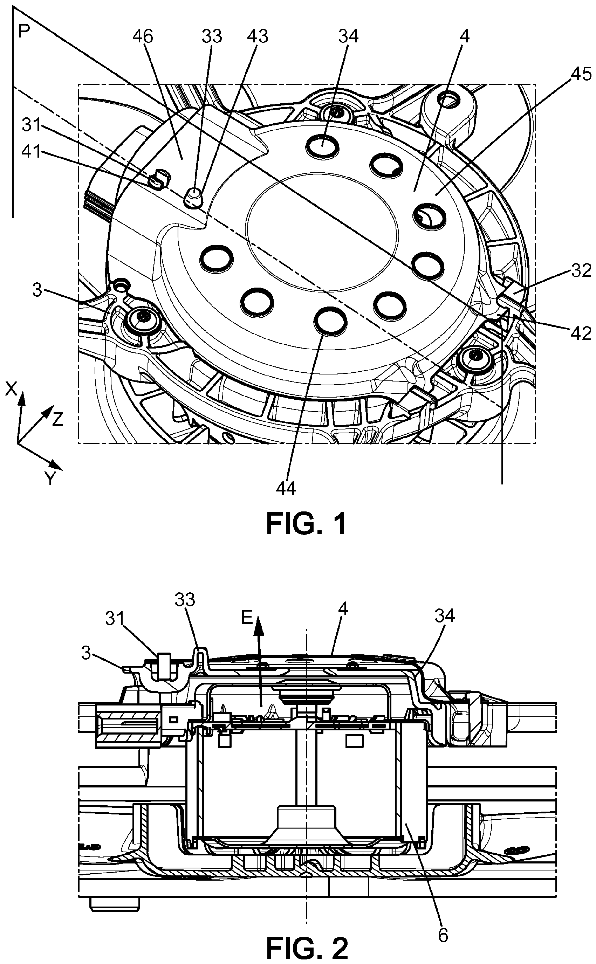

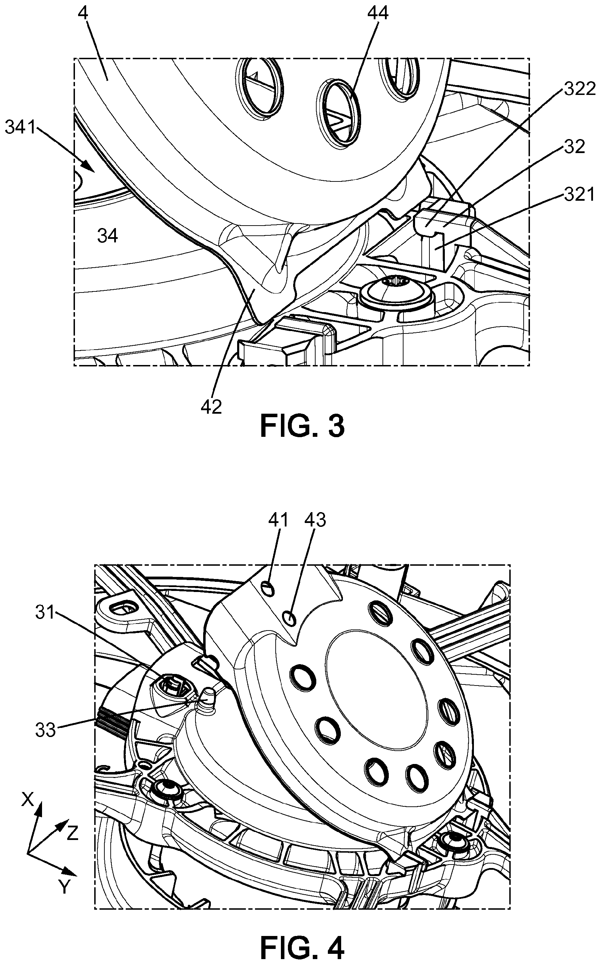

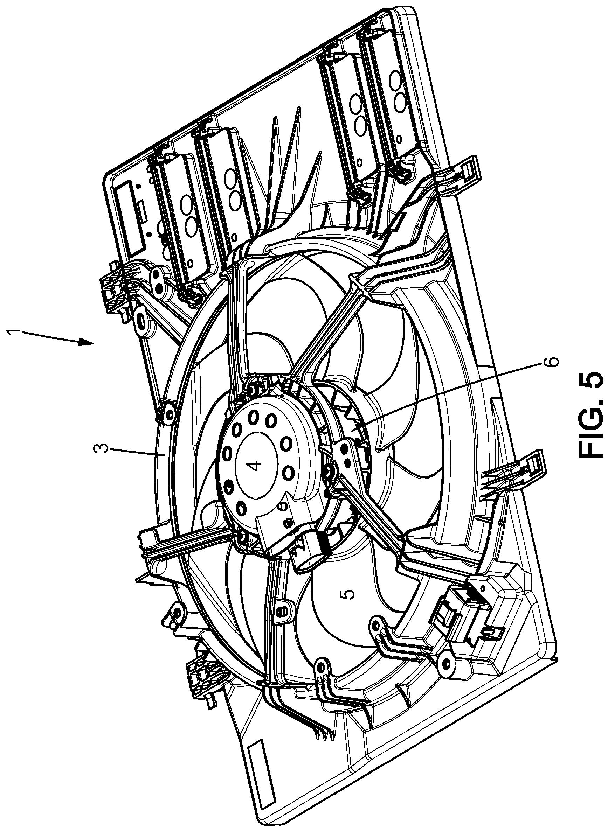

Un boitier de ventilation selon la présente invention sera décrit ci-après en référence aux figures 1 à 5
Ce boitier comprend une buse de ventilation **3** et un écran de protection **4.** La buse de ventilation **3** et l'écran de protection **4** sont destinés à être empilés suivant une direction d'empilement **E.** Par les termes « direction d'empilement », on entend la direction normale à la surface de plus grand contact entre l'écran de protection **4** et la buse de ventilation **3.**

La buse de ventilation **3** est prévue pour le logement d'une hélice de ventilation **5.** La buse de ventilation **3** présente en outre un logement de moteur pour la réception d'un moteur de ventilateur **6.** De manière générale, le logement de moteur est de forme cylindrique à base circulaire dont l'axe est l'axe de l'hélice de ventilation **5.**

L'écran de protection **4** présente une partie de forme générale circulaire, et plus particulièrement la forme d'une coupelle plus ou moins creuse selon l'encombrement du moteur.

L'écran de protection **4** est fixable sur la buse de ventilation **3** de manière à recouvrir au plus le logement de moteur du côté extérieur de la buse de ventilation **3.** On entend dans le présent exposé les termes « au plus le logement de moteur » que l'écran de protection **4** recouvre là où le moteur doit être installé et éventuellement un peu plus la buse de ventilation **3** mais uniquement dans la mesure où ce recouvrement additionnel est nécessaire à la fixation de l'écran de protection **4** à la buse de ventilation **3.** Ainsi, ces termes ne concernent pas le cas où l'écran de protection **4** recouvre la totalité de la surface arrière de la buse de ventilation **3.** L'écran de protection **4** peut être un écran de protection thermique et/ou anti-éclaboussures et/ou anti-projectiles. L'écran de protection **4** peut être en métal, typiquement en aluminium.

La fixation de l'écran de protection **4** sur la buse de ventilation **3** est réalisée par un élément ressort **31.**

L'écran de protection **4** peut présenter un orifice circulaire **41** afin de coopérer avec l'élément ressort **31** pour le recevoir de manière à ce que l'élément ressort **31** traverse l'orifice circulaire **41.** L'élément ressort **31** peut comprendre alors deux ailettes face à face et s'étendant perpendiculairement à la surface sur laquelle l'élément ressort **31** est prévu. La paroi extérieure des ailettes correspond à une partie de celle d'un cylindre à base circulaire de rayon égale à celui de l'orifice **41** de l'écran de protection **4.** Par ailleurs, les ailettes sont déformables de manière à se rapprocher l'une de l'autre. En d'autres termes, les ailettes ont la forme d'un cylindre droit dont la base est un arc de cercle prolongé par la corde correspondante. Par ailleurs, les deux ailettes sont comprises dans un cylindre à base circulaire correspondant aux arcs de cercle. De préférence les cordes des bases des deux éléments ressort sont parallèles.

En outre, chacune des ailettes présente un élément de collet sur son extrémité libre de manière à empêcher le mouvement de l'écran de protection **4** dans la direction d'empilement. Par « élément de collet », on comprend dans le présent exposé une arrête présente sur l'extrémité libre de chacun des ailettes. Cette arrête peut se limiter à la paroi extérieure de celles-ci.

La droite normale à la surface à partir de laquelle s'étendent les deux ailettes peut être parallèle à la direction d'empilement **E.** En d'autres termes, les ailettes s'étendent dans une direction perpendiculaire à la direction d'empilement **E.**

La buse de ventilation **3** peut comprendre une butée **32** au moins limitant les mouvements de l'écran de protection **4** selon une direction. La butée **32** peut aller jusqu'à empêcher les mouvements de l'écran de protection **4.**

Par exemple, la butée **32** empêche les mouvements de l'écran de protection **4** selon la direction d'empilement **E.** En outre ou alternativement, la butée **32** limite les mouvements de l'écran de protection **4** selon une direction perpendiculaire à la direction d'empilement **E** voire les deux directions perpendiculaires à la direction d'empilement **E** et perpendiculaires l'une à l'autre.

L'écran de protection **4** peut alors comprendre en périphérie une extension **42** destinée à venir au contact de la butée **32** de manière à ce que la butée **32** empêche tout mouvement de l'écran de protection dans la direction d'empilement **E.** Cette extension **42** est un élément généralement plat s'étendant à partir de la périphérie de l'écran de protection **4.** Dans ce cas, la butée **32** peut comprendre un logement de réception de l'extension **42** et l'extension **42** est insérable dans le logement de réception. Plus particulièrement, la butée **32** peut être composée d'un montant **321** s'étendant à partir de la surface de la buse de ventilation **3** et d'un auvent **322** s'étendant à partir de l'extrémité libre du montant **321.** Le montant **321** limite les mouvements de l'écran de protection **4** dans les directions perpendiculaires à la direction d'empilement **E,** tandis que l'auvent **322** empêche les mouvements de l'écran de protection **4** dans la direction d'empilement **E.** De préférence, deux butées **32** et deux extensions **42** sont prévues.

De préférence, l'orifice **41** pour l'insertion de l'élément ressort **31** d'un côté et la ou les extensions **42** de l'autre côté sont prévues sur l'écran de protection **4** à des positions diamétralement opposées. En effet, plus l'orifice **41** et les extensions **42** sont éloignés et plus il y a gain de précision.

La buse de ventilation **3** peut comprendre un taquet **33** cylindrique et l'écran de protection **4** un deuxième orifice **43** circulaire pour l'insertion du taquet **33.** Les diamètres du taquet **33** et du deuxième orifice **43** sont alors sensiblement égaux de manière à ce que le taquet **33** empêche tout mouvement de l'écran de protection **4** selon une voire deux directions perpendiculaires à la direction d'empilement **E** et perpendiculaires l'une à l'autre.

De préférence, le deuxième orifice **41** pour l'insertion du taquet **31** d'un côté et la ou les extensions **42** de l'autre côté sont prévues sur l'écran de protection **4** à des positions diamétralement opposées.

De préférence, les deux orifices **41, 43** sont prévus sur l'écran de protection **4** à des endroits proches permettant de faciliter le montage.

L'un ou l'autre des orifices **41, 43,** voire les deux, peut être prévu sur une partie rectangulaire **46** de l'écran de protection s'étendant à partir de la partie **45** en forme de coupelle, de préférence à l'opposé du ou des extensions **42.**

La buse de ventilation **3** peut comprendre une paroi **34** destinée à recouvrir le moteur **6** sous l'écran de protection **4.** La paroi **34** présente une ouverture **341** pour notamment laisser échapper la chaleur générée par le moteur **6.** L'écran de protection **4** peut alors présenter des ouvertures **44** pour laisser échapper cette chaleur générée par le moteur **6.** Afin d'empêcher les éclaboussures d'atteindre le moteur **6,** et ou de renforcer la protection thermique dans le cas où paroi **34** et écran de protection **4** sont dotés de ces ouvertures **341, 44 ;** celle **341** de la paroi **34** d'une part, et celles **44** de l'écran de protection **4,** d'autre part, de préférence ne se font pas face. On entend par là que si l'ouverture **341** de la paroi **34** et les ouvertures **44** de l'écran de protection **4** étaient projetées sur un même plan de manière à avoir la plus grande aire possible, il n'y aurait alors pas de recouvrement entre l'ouverture **341** de la paroi **34** d'un côté et les ouvertures **44** de l'écran de protection **4** de l'autre. Ainsi, la combinaison de l'ouverture **341** de la paroi **34** et des ouvertures **44** de l'écran de protection **4** forme des chicanes laissant passer la chaleur du moteur mais empêchant un liquide projeté ou des particules solides (tels que des gravillons) d'atteindre le moteur **6.** Dans un mode de réalisation privilégié, les ouvertures **44** de l'écran de protection **4** sont réparties en cercle, préférentiellement régulièrement espacées les unes des autres, et l'ouverture **341** de la paroi **34** est disposée de préférence de manière centrale par rapport à ce cercle. L'ouverture **341** de la paroi **34** peut être circulaire. Les ouvertures **44** de l'écran de protection **4** peuvent être circulaires. Dans le cas où l'ouverture **341** de la paroi **34** et les ouvertures **44** de l'écran de protection **4** sont disposées suivant un cercle, le rayon de l'ouverture **341** de la paroi **34** est inférieur au cercle suivant lequel les ouvertures **44** de l'écran de protection **4** sont disposées de manière à ce que celles-ci ne font pas face à l'ouverture **341** de la paroi **34.**

Un tel boîtier peut être utilisé pour un ventilateur **1** pour véhicule automobile. Un tel ventilateur **1** comprend en outre une hélice de ventilation **5** logée dans la buse de ventilation **3,** et un moteur **6** logé dans le logement de moteur de la buse de ventilation **3.** L'axe de rotation de l'hélice de ventilation **5** est préférentiellement suivant la direction d'empilement **E.** En outre, lorsque la buse de ventilation **3** comprend une paroi **34** avec une ouverture **341** circulaire, l'axe de rotation de l'hélice de ventilation **5** traverse préférentiellement le centre de cette ouverture **341.** Pareillement, lorsque l'écran de protection **4** présente des ouvertures **44** disposées suivant un cercle, l'axe de rotation de l'hélice de ventilation **5** traverse préférentiellement le centre de ce cercle.

### Exemple

Dans cet exemple, le boitier de ventilation comprend une buse de ventilation **3** et un écran de protection **4.** Le logement de moteur est circulaire et l'écran de protection **4** a une forme générale de coupelle avec une partie rectangulaire **46** s'étendant à partir de la coupelle **45.**

La buse de ventilation **3** comprend un élément ressort **31** à ailettes tel que décrit ci-dessus et deux butées **32** avec montant **321** et auvent **322.** Les auvents **322** sont destinés à empêcher tout mouvement de l'écran de protection **4** suivant la direction d'empilement **E.** Les montants **321** servent de guidage pour l'assemblage de l'écran de protection **4** à la buse de ventilation **3.** La buse de ventilation **3** comprend en outre un taquet **33** cylindrique à base circulaire destiné à empêcher tout mouvement de l'écran de protection **4** suivant toute direction perpendiculaire à la direction d'empilement **E.** L'élément ressort **31** et le taquet **33** sont disposés à proximité l'un de l'autre et sensiblement diamétralement opposés aux butées **32.** La buse de ventilation **3** comprend également une paroi **34** destinée à recouvrir un moteur de ventilateur et munie d'une ouverture **341** circulaire centrale.

L'écran de protection **4** présente un orifice **41** pour le couplage avec l'élément ressort et un orifice **42** pour le passage du taquet **32.** Ces deux orifices **41, 43** sont prévus sur la partie rectangulaire **46** de l'écran de protection **4.** En outre, l'écran de protection **4** comprend deux extensions **42** diamétralement opposées par rapport à la partie rectangulaire **46.** L'écran de protection **4** présente également des ouvertures **44** disposées en cercle dont le centre est aligné avec celui de l'ouverture **341** de la paroi **34** et dont le rayon est supérieur à celui de l'ouverture **341** de la paroi **34** de manière à ce que les ouvertures **44** de l'écran de protection **4** ne fassent pas face à l'ouverture **341** de la paroi **34.**

Afin d'assembler l'écran de protection **4** à la buse de ventilation **3,** les extensions **42** de l'écran de protection **4** sont tout d'abord insérées entre les montants **321** et auvents **322** des butées **32** de manière à ce que le plan moyen de l'écran de protection **4** et le plan moyen de la buse de ventilation **3** forme un angle. Les montants **321** servent de guidage aux extensions **42.** Puis l'écran de protection **4** est rabattu sur la paroi **34** de la buse de ventilation **3** de manière à faire coïncider les orifices **41, 43** de l'écran de protection **4** d'un côté et l'élément ressort **31** et le taquet **33** de l'autre. Une pression additionnelle permet de forcer les ailettes de l'élément ressort **31** à se rapprocher pour permettre l'insertion de l'élément ressort **31** à travers l'orifice **41** correspondant de l'écran de protection **4** jusqu'à ce que l'orifice **41** passe outre les éléments de collet. À cet instant, les deux ailettes reviennent à leur position initiale. Les éléments de collet empêchent alors tout mouvement de l'écran de protection **4** dans la direction d'empilement **E.** L'écran de protection **4** est alors fixé sur la buse de ventilation **3.**

## Revendications

1. Boitier de ventilation comprenant :
- une buse de ventilation (3) pour le logement d'hélice de ventilation, la buse de ventilation (3) présentant un logement de moteur pour la réception d'un moteur de ventilateur ; et
- un écran de protection (4) fixable sur la buse de ventilation (3) de manière à recouvrir le logement de moteur du côté extérieur de la buse de ventilation (3),
la buse de ventilation (3) et l'écran de protection (4) étant destinés à être empilés suivant une direction d'empilement (E),
la fixation de l'écran de protection (4) sur la buse de ventilation (3) étant réalisée par un élément ressort (31) et l'écran de protection (4) recouvrant au plus le logement de moteur, la buse de ventilation (3) comprenant une butée (32) au moins limitant les mouvements de l'écran de protection (4) selon au moins une direction, **caractérisé en ce que** l'écran de protection (4) comprend en périphérie une extension (42) destinée à venir au contact de la butée (32).

2. Boitier selon la revendication 1, dans lequel l'écran de protection (4) présente un orifice circulaire (41), et
dans lequel l'élément ressort (31) comprend deux ailettes face à face et s'étendant perpendiculairement à la surface sur laquelle l'élément ressort (31) est prévu, leurs parois extérieur correspondant à une partie de celle d'un cylindre à base circulaire de rayon égale à celui de l'orifice circulaire de l'écran de protection,
dans lequel les ailettes étant déformables de manière à se rapprocher l'une de l'autre, et
dans lequel chacune des ailettes présente un élément de collet sur son extrémité libre de manière à empêcher le mouvement de l'écran de protection dans la direction d'empilement.

3. Boitier selon la revendication 2, dans lequel la droite normale à la surface à partir de laquelle s'étendent les deux ailettes est parallèle à la direction d'empilement (E).

4. Boitier selon la revendication 1, dans lequel la butée (32) empêche les mouvements de l'écran de protection (4) selon la direction d'empilement (E).

5. Boitier selon la revendication 1 ou la revendication 4, dans lequel la butée (32) limite les mouvements de l'écran de protection (4) selon une direction perpendiculaire à la direction d'empilement (E).

6. Boitier selon la revendication 1, dans lequel la butée (32) comprend un logement de réception de l'extension et l'extension (42) est insérable dans le logement de réception.

7. Boitier selon l'une des revendications 1 à 6, dans lequel la buse de ventilation (3) comprend un taquet (33) cylindrique et l'écran de protection (4) présente un deuxième orifice (43) circulaire pour l'insertion du taquet (33), les diamètres du taquet (33) et du deuxième orifice (43) étant sensiblement égaux de manière à ce que le taquet (33) empêche tout mouvement de l'écran de protection (4) selon une direction perpendiculaire à la direction d'empilement (E).

8. Boitier selon l'une des revendications 1 à 7, dans lequel la buse de ventilation (3) comprend une paroi (34) présentant une ouverture (341) sous l'écran de protection (4) et dans lequel l'écran de protection (4) présente des ouvertures (44), l'ouverture (341) de la paroi, d'une part, et celles (44) de l'écran de protection, d'autre part, ne se faisant pas face.

9. Ventilateur (1) pour véhicule automobile comprenant un boîtier selon l'une des revendications 1 à 8, une hélice de ventilation (5) logée dans la buse de ventilation (3), et un moteur de ventilateur (6) logé dans le logement de moteur de la buse de ventilation (3).

## Patentansprüche

1. Lüftungsgehäuse, beinhaltend:
- eine Lüftungsdüse (3) für die Aufnahme eines Lüftungsrads, wobei die Lüftungsdüse (3) eine Motoraufnahme für die Unterbringung eines Lüftermotors aufweist; und
- ein Schutzgitter (4), das an der Lüftungsdüse (3) befestigt werden kann, um die Motoraufnahme auf der Außenseite der Lüftungsdüse (3) abzudecken,
wobei die Lüftungsdüse (3) und das Schutzgitter (4) dazu bestimmt sind, gemäß einer Stapelrichtung (E) gestapelt zu sein,
wobei die Befestigung des Schutzgitters (4) an der Lüftungsdüse (3) durch ein Federelement (31) erfolgt und das Schutzgitter (4) höchstens die Motoraufnahme abdeckt,
wobei die Lüftungsdüse (3) einen Anschlag (32) beinhaltet, der mindestens die Bewegungen des Schutzgitters (4) gemäß mindestens einer Richtung begrenzt, **dadurch gekennzeichnet, dass** das Schutzgitter (4) am Umfang eine Erweiterung (42) beinhaltet, die dazu bestimmt ist, mit dem Anschlag (32) in Kontakt zu kommen.

2. Gehäuse nach Anspruch 1, wobei das Schutzgitter (4) ein kreisförmiges Loch (41) aufweist und
wobei das Federelement (31) zwei sich gegenüberliegende Lamellen beinhaltet, die sich senkrecht zu der Oberfläche, auf der das Federelement (31) vorgesehen ist, erstrecken, wobei ihre Außenwände einem Teil von derjenigen eines Kreiszylinders mit einem Radius gleich dem des kreisförmigen Loches des Schutzgitters entsprechen,
wobei die Lamellen verformbar sind, sodass sie sich einander annähern können, und wobei jeder der Lamellen an seinem freien Ende ein Schulterelement aufweist, um die Bewegung des Schutzgitters in der Stapelrichtung zu verhindern.

3. Gehäuse nach Anspruch 2, wobei die Gerade, die zu der Oberfläche, von der sich die zwei Lamellen erstrecken, senkrecht ist, parallel zu der Stapelrichtung (E) ist.

4. Gehäuse nach Anspruch 1, wobei der Anschlag (32) die Bewegungen des Schutzgitters (4) gemäß der Stapelrichtung (E) verhindert.

5. Gehäuse nach Anspruch 1 oder Anspruch 4, wobei der Anschlag (32) die Bewegungen des Schutzgitters (4) gemäß einer zu der Stapelrichtung (E) senkrechten Richtung begrenzt.

6. Gehäuse nach Anspruch 1, wobei der Anschlag (32) eine Aufnahme zur Unterbringung der Erweiterung beinhaltet und die Erweiterung (42) in die Unterbringungsaufnahme einführbar ist.

7. Gehäuse nach einem der Ansprüche 1 bis 6, wobei die Lüftungsdüse (3) eine zylindrische Nase (33) beinhaltet und das Schutzgitter (4) ein zweites kreisförmiges Loch (43) zum Einführen der Nase (33) aufweist, wobei die Durchmesser der Nase (33) und des zweiten Loches (43) im Wesentlichen gleich sind, sodass die Nase (33) jegliche Bewegung des Schutzgitters (4) gemäß einer zu der Stapelrichtung (E) senkrechten Richtung verhindert.

8. Gehäuse nach einem der Ansprüche 1 bis 7, wobei die Lüftungsdüse (3) eine Wand (34) beinhaltet, die eine Öffnung (341) unter dem Schutzgitter (4) aufweist, und wobei das Schutzgitter (4) Öffnungen (44) aufweist, wobei die Öffnung (341) der Wand einerseits und diejenigen (44) des Schutzgitters andererseits sich nicht gegenüberliegen.

9. Lüfter (1) für ein Kraftfahrzeug, beinhaltend ein Gehäuse nach einem der Ansprüche 1 bis 8, ein Lüftungsrad (5), das in der Lüftungsdüse (3) aufgenommen ist, und einen Lüftermotor (6), der in der Motoraufnahme der Lüftungsdüse (3) aufgenommen ist.

## Claims

1. Ventilation casing comprising:
- a ventilation shroud (3) for housing a ventilation blower wheel, the ventilation shroud (3) having a motor housing for receiving a fan motor; and
- a protective screen (4) that can be attached to the ventilation shroud (3) so as to cover the motor housing on the outer side of the ventilation shroud (3),
the ventilation shroud (3) and the protective screen (4) being intended to be stacked in a stacking direction (E), the protective screen (4) being attached to the ventilation shroud (3) using a spring element (31) and the protective screen (4) covering at most the motor housing, the ventilation shroud (3) comprising a stop (32) at least limiting the movements of the protective screen (4) in at least one direction, **characterized in that** the protective screen (4) comprises, at the periphery, an extension (42) intended to come into contact with the stop (32).

2. Casing according to Claim 1, wherein the protective screen (4) has a circular orifice (41), and
wherein the spring element (31) comprises two blades facing one another and extending perpendicular to the surface on which the spring element (31) is provided, their outer walls corresponding to a portion of that of a cylinder with a circular base with a radius equal to that of the circular orifice of the protective screen,
wherein the blades are deformable so as to move towards one another, and wherein each of the blades has a collar element on its free end so as to prevent the movement of the protective screen in the stacking direction.

3. Casing according to Claim 2, wherein the straight line normal to the surface from which the two blades extend is parallel to the stacking direction (E).

4. Casing according to Claim 1, wherein the stop (32) prevents the movements of the protective screen (4) in the stacking direction (E).

5. Casing according to Claim 1 or Claim 4, wherein the stop (32) limits the movements of the protective screen (4) in a direction perpendicular to the stacking direction (E).

6. Casing according to Claim 1, wherein the stop (32) comprises a housing for receiving the extension and the extension (42) can be inserted into the receiving housing.

7. Casing according to one of Claims 1 to 6, wherein the ventilation shroud (3) comprises a cylindrical lug (33) and the protective screen (4) has a second circular orifice (43) for the insertion of the lug (33), the diameters of the lug (33) and of the second orifice (43) being substantially equal so that the lug (33) prevents any movement of the protective screen (4) in a direction perpendicular to the stacking direction (E).

8. Casing according to one of Claims 1 to 7, wherein the ventilation shroud (3) comprises a wall (34) having an opening (341) beneath the protective screen (4) and wherein the protective screen (4) has openings (44), the opening (341) in the wall, on the one hand, and those (44) in the protective screen, on the other hand, not facing one another.

9. Fan (1) for a motor vehicle comprising a casing according to one of Claims 1 to 8, a ventilation blower wheel (5) housed in the ventilation shroud (3), and a fan motor (6) housed in the motor housing of the ventilation shroud (3).
